# EUROPÄISCHE PATENTANMELDUNG

(11) **EP 4 592 547 A1**
(43) Veröffentlichungstag der Anmeldung: **30.07.2025**
(21) Anmeldenummer: 25151682.9
(22) Anmeldetag: 14.01.2025
(51) Int. Cl.: F16D 65/092, F16D 69/04, F16D 65/12, B05B 13/00

(54) **VERFAHREN ZUR HERSTELLUNG VON BREMSBELÄGEN MIT MODIFIZIERTER BELAGTRÄGERPLATTE**

(30) Priorität: 23.01.2024 DE 102024101835
(71) Anmelder: TMD Friction Services GmbH, 51381 Leverkusen (DE)
(72) Erfinder: Grabiec, Dr. Tomasz, 51427 Bergisch Gladbach (DE); Stolz, Christian, 51381 Leverkusen (DE); Buzidis, Ioannis, 51375 Leverkusen (DE); Dohle, Achim, 51375 Leverkusen (DE)
(74) Vertreter: Weckenbrock, Matthias

(57) **Zusammenfassung**

Die Erfindung betrifft ein Verfahren zur Herstellung eines Bremsbelags, welcher eine Belagträgerplatte und einen Reibbelag aufweist, umfassend mindestens die folgenden Verfahrensschritte:
a) Bereitstellen einer Belagträgerplatte zur Befestigung eines Reibbelags, mit oder ohne einer Zwischenschicht zwischen Belagträgerplatte und Reibbelag, auf der Belagträgerplatte,
b) Aufrauen von zumindest einem Teilbereich einer Oberfläche der Belagträgerplatte und
c) Befestigung des Reibbelags auf der aufgerauten Belagträgerplattenoberfläche, dadurch gekennzeichnet, dass das Aufrauen der Belägträgerplättenoberfläche mit einem gepulsten Hochdruck-Wasserstrahl erfolgt.

## Beschreibung

Die vorliegende Erfindung betrifft ein Verfahren zur Herstellung von Bremsbelägen, insbesondere von Scheibenbremsbelägen, welches unter anderem durch eine Vorbehandlung oder Modifizierung der Belagträgerplatte (Rückenplatte) gekennzeichnet ist.

Bremsbeläge für Kraftfahrzeuge bestehen zumeist aus einer Belagträgerplatte und einem darauf befindlichen und befestigten Reibbelag. Zwischen Reibbelag und Belagträgerplatte kann noch zusätzlich eine Zwischenschicht angeordnet sein, die oft die Funktion einer Geräuschdämpfungsschicht übernimmt. In diesem Fall ist diese Zwischenschicht mit dem Reibbelag und der Belagträgerplatte verbunden. Der Reibbelag bzw. die Zwischen- oder Dämpfungsschicht werden in der Regel mit einem Kleber auf der Belagträgerplatte befestigt. Besteht der Reibbelag aus Sintermaterialien oder enthält diese in ausreichendem Maß, so kann der Reibbelag auch ohne Kleber durch Heißverpressen an der Belagträgerplatte befestigt werden. Zusätzlich kann der Reibbelag auch mit Befestigungsmitteln, wie Bolzen, Stiften und Nieten, an der Plattenoberfläche befestigt werden.

Zur Verbesserung der Anbindung von Reibbelag oder Zwischenschicht an die Belagträgerplatte wird im Stand der Technik die Oberfläche der Platte einer Bearbeitung oder allgemein einer Vorbereitung unterzogen. Dazu wird die Trägerplatte z.B. mechanisch bearbeitet und dadurch kleine Haken an der Plattenoberfläche erzeugt (Crimpen). Bestehen die Platten z.B. aus einem Gusswerkstoff wie Grauguss, so können dort beim Gießen direkt Halteelemente auf der Plattenoberfläche oder an deren Rändern angebracht werden. Schließlich kann die Oberfläche der Belagträgerplatte auch durch eine Strukturierung mit Hilfe von Laserstrahlen oder durch Sandstrahlen für eine bessere Anbindung an den Reibbelag vorbereitet werden.

So zeigt DE 197 12 203 A1 ein Verfahren zur Herstellung eines Bremsbelags. Für den Fall, dass die Belagträgerplatte aus Trägerblechen aus gewalztem oder ungewalztem Stahl besteht, wird eine Oberflächenbehandlung zur besseren Haftung des Reibbelags z.B. durch einen chemischen Beizvorgang, durch Sand- oder Wasserstrahlen oder durch einen anderen oberflächenabtragenden oder deformierenden Vorgang als vorteilhaft beschrieben. Dabei ist das Beizen in einer Phosphatierungsanlage bevorzugt.

DE 32 32 865 A1 offenbart ebenfalls ein Herstellungsverfahren für einen Bremsbelag. Dabei wird eine eiserne Druckplatte mit einem Wasserstrahlverfahren gereinigt, wobei eine Oberflächenrauigkeit mit einem Mittenrauwert Ra von 0,8 bis 1,3 µm erzeugt wird. Allerdings ist anschließend ein Beschichten der Oberfläche erforderlich, um eine zuverlässige Verbindung mit dem Reibbelag zu gewährleisten. Mit trockenen Grobblasverfahren (z.B. Sandstrahlverfahren) werden Oberflächenrauigkeiten mit einem Mittenrauwert Ra von 7,7 bis 8,7 µm erzielt.

US 6 269 669 B1 offenbart ein feuchtes Abstrahlverfahren mit Partikeln für Belagträgerplatten. Gemäß US 6 269 669 B1 werden Belagträgerplatten konventionell auf eine Oberflächenrauigkeit mit einem Mittenrauwert Ra zwischen 2 bis 7 µm aufgeraut, um eine verbessere Anbindung mit den Reibmaterial zu ermöglichen.

EP 1 178 236 A2 offenbart auch ein feuchtes Abstrahlverfahren mit Partikeln für Belagträgerplatten, wobei eine bevorzugte Oberflächenrauigkeit mit einem Mittenrauwert Ra von 1,5 bis 7 µm für eine Grundierung vorgesehen ist, auf der dann das Reibmaterial aufgebracht wird. Die bevorzugte Rautiefe Rz beträgt 10 bis 30 µm.

JP 5 328 609 B2 offenbart ein Abstrahlverfahren mit Stahlkugel für Belagträgerplatten. Die abgestrahlten Belagträgerplatten weisen Oberflächenrauigkeiten mit einer Rautiefe Rz zwischen 5 bis 15 bzw. 20 µm auf. Nach dem Abstrahlen wird noch ein Kleber für das Reibmaterial auf die Belagträgerplatten aufgetragen.

DE 10 2019 213 464 A1 offenbart ein Verfahren zur Herstellung eines Reibbremskörpers, wobei die Belagträgerplatte aus Grauguss mit eingelagertem Graphit besteht. Vor Aufbringen einer Reibbelagbeschichtung wird der oberflächennahe Graphit durch eine Wasserstrahlbehandlung reduziert oder entfernt. Das Aufbringen der Reibbelagbeschichtung erfolgt durch Laserauftragschweißen.

Überdies ist im Stand der Technik die Verwendung von Wasserstrahlverfahren zur Oberflächenbearbeitung bekannt. So bietet die Ecoclean-Group/DE Verfahren und Vorrichtungen zur Vorbereitung von Metalloberflächen vor einem thermischen Spritzverfahren zum Auftrag von Hartmetallen oder Hartmetalllegierungen an.

Die vorangehend geschilderten Maßnahmen zur Verbesserung der Anbindung von Zwischenschicht oder Reibbelag auf der Oberfläche einer Belagträgerplatte bei der Herstellung von Bremsbelägen sind aufwendig, zeit- und kostenintensiv und von daher verbesserungswürdig. Sie bergen überdies die Gefahr, dass zugesetzte Stoffe bei der Vorbereitung (z.B. Sandpartikel) oder entstehende Partikel bei der Bearbeitung (z.B. Späne, Metallpartikel) durch zusätzliche Reinigungsschritte entfernt werden müssen.

Der Erfindung lag daher die Aufgabe zugrunde, ein Verfahren zur Herstellung eines Bremsbelags bereitzustellen, welches die im Stand der Technik auftretenden Nachteile vermeidet oder weitestgehend minimiert und welches gleichzeitig eine feste und dauerhafte Verbindung zwischen Reibbelag und Belagträgerplatte sicherstellt.

Überdies sollte festgestellt werden, ob durch eine verbesserte Verbindung zwischen Reibbelag und Belagträgerplatte noch zusätzliche Vorteile, wie erhöhte Sicherheit bei Hochleistungsanwendungen z.B. im Rennsport, und verbesserte Komforteigenschaften, wie Reduzierung der im laufenden Betrieb auftretenden Bremsgeräusche, realisiert werden können.

Erfindungsgemäß wird daher vorgeschlagen, beim Herstellungsprozess eines Bremsbelags die Belagträgerplatte durch Aufrauen der Oberfläche (ganz oder teilweise) für die Aufnahme des Klebers und der Zwischenschicht oder für die Aufnahme des Klebers und des Reibbelags oder vorzugsweise für die Aufnahme der Zwischenschicht und/oder Reibbelag ohne vorherigen Kleberauftrag vorzubereiten. Durch das erfindungsgemäße Aufrauen wird vorteilhafterweise auch ohne Kleber eine gute Haftung zwischen Belagträgerplatte und Reibmaterial bzw. Zwischenschicht erreicht.

Diese Vorbereitung der Belagträgerplatte erfolgt erfindungsgemäß durch Aufrauung der Plattenoberfläche, auf welcher die Zwischenschicht bzw. der Reibbelag angebracht werden soll. Dazu kann zunächst eine Kleberschicht auf die aufgeraute Oberfläche aufgebracht werden. Bevorzugt wird die Zwischenschicht bzw. der Reibbelag direkt mit der aufgerauten Oberfläche heißverpresst. Die dafür verwendeten Parameter, wie Druck und Temperatur, entsprechen den Werten aus dem Stand der Technik und sind dem Fachmann bekannt.

Dabei wird das Aufrauen mit Hilfe eines (Hochdruck-) Wasserstrahls bewirkt. Entsprechende Vorrichtungen für eine solche Wasserstrahlbehandlung sind im Handel erhältlich und werden z.B. von der Ecoclean-Group/DE angeboten.

Nachfolgend werden die bevorzugten Ausgestaltungen und Parameter für das erfindungsgemäße Verfahren näher erläutert.

Bevorzugt wird die sog. pulsierende Mitteldruck Wasserstrahltechnik, wie diese z.B. von der Firma Ecoclean vertrieben wird, eingesetzt. Dabei wird die Wasserstrahldüse, bevorzugt in Form einer sog. gepulsten Wasserstrahldüse, mit konstantem Arbeitsdruck kombiniert mit einem sog. Ultraschalltransducer betrieben. Der Arbeitsdruck beträgt bevorzugt bis 850 bar und der vom Ultraschalltransducer erzeugte Pulsationsbereich beträgt bevorzugt bis zu ca. 20.000 Pulse/s (20 kHz). Die Strömungsgeschwindigkeit des Wassers liegt bevorzugt deutlich oberhalb von 50 m/s und beträgt insbesondere bis zu 380 m/s. Die Wassertemperatur entspricht in der Regel der Leitungstemperatur (Temperatur, mit der das Wasser im Netz von den Versorgern zur Verfügung gestellt wird), oder liegt im Temperaturbereich von Leitungs- und Umgebungs- oder Raumtemperatur. In der Regel ist es nicht erforderlich, das Wasser über die Raumtemperatur zu erwärmen.

Es hat sich gezeigt, dass für eine erfindungsgemäß ausreichende Aufrauung der Belagträgerplattenoberfläche in der Regel der Einsatz von gepulsten Wasserstrahlen notwendig ist. Dies trifft insbesondere auf Metalloberflächen zu. Vorzugweise werden gepulste Wasserstrahlen mit einem Wasserdruck zwischen 600 bis 850 bar verwendet. Die Pulsation beträgt vorzugsweise 10 bis 25 kHz und besonders bevorzugt 10 bis 20 kHz.

Überraschenderweise wurde gefunden, dass Bremsbeläge, welche die erfindungsgemäß behandelten Belagträgerplatten aufweisen, gegenüber solchen ansonsten identischen Bremsbelägen mit den gleichen jedoch unbehandelten Trägerplatten, eine deutlich geringere Geräuschentwicklung bei Bremsvorgängen verursachen. Denn die erfindungsgemäß behandelten Trägerplatten weisen eine erhöhte Dämpfung auf. Bei den bisher durchgeführten Untersuchungen war die Dämpfung im Bereich von 6,4% bis 23% gegenüber herkömmlichen Bremsbelägen erhöht und kann in Abhängigkeit vom Belagträger- und Reibmaterialtyp auch mehr als 30% betragen. Die erhöhte Dämpfung und damit deutliche Geräuschreduktion ist dabei auf die erfindungsgemäß herstellbare stark erhöhte Oberflächenrauheit zurückzuführen, die weit oberhalb den bisher bei Belagträgerplatten konventionell verwendeten Oberflächenrauheiten liegt.

Somit betrifft die vorliegende Erfindung auch ein Verfahren zur Geräuschreduktion verursacht von Bremsbelägen bei Bremsvorgängen im Fahrbetrieb sowie die Verwendung der erfindungsgemäßen Bremsbeläge für den genannten Zweck sowie die Verwendung von erfindungsgemäßen Belagträgerplatten für die Herstellung von Bremsbelägen für diesen Zweck.

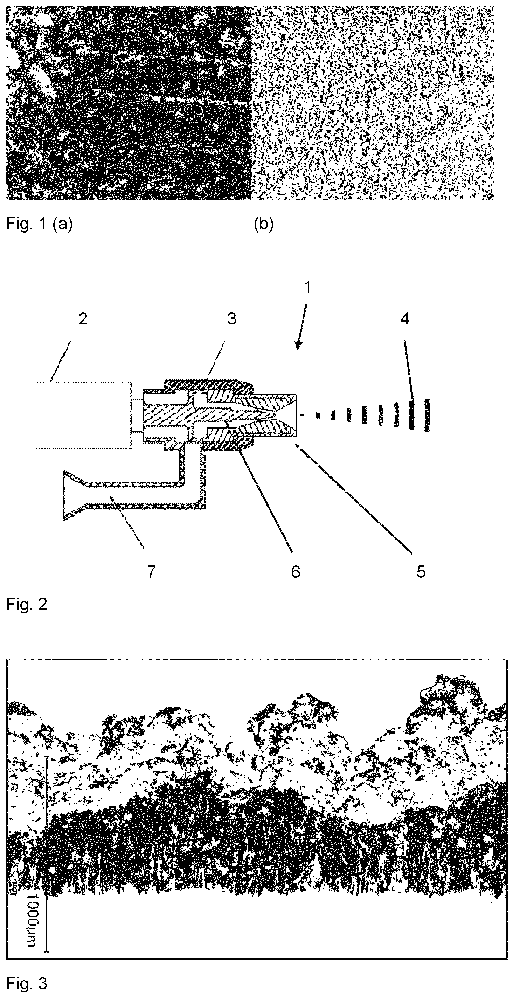

Erfindungsgemäß bevorzugt sind Oberflächenrauheiten mit einer Rautiefe Rz von 50 und bis 500, weiter bevorzugt sind Oberflächenrauheiten von 100 bis 350 und besonders bevorzugt 150 bis zu 300 Mikrometer. Die Rauheiten werden bevorzugt anhand von Schliffbildern der erfindungsgemäß behandelten Oberflächen mit Hilfe eines Mikroskops gemessen. Ein derartiges Schliffbild ist in Figur 3 gezeigt.

Für die Messung der Rautiefe Rz sind im Stand der Technik weitere verschiedene Verfahren und auch insbesondere Messgeräte verschiedener Anbieter beschrieben, die dem Fachmann bekannt sind (vgl. z.B. Wikipedia unter dem Stichwort "Rauheitsmessung").

Bei einer erhöhten Oberflächenrauheit mit einer Rautiefe Rz von mindestens 100 µm kann in Abhängigkeit vom Belagträger- und Reibmaterialtyp bereits eine deutlich geringere Geräuschentwicklung bei Bremsvorgängen mit Bremsbelägen, welche die erfindungsgemäß behandelten Belagträgerplatten aufweisen, auftreten. Eine besonders gute Dämpfung und Geräuschreduzierung kann beispielweise bei einer Oberflächenrauheit mit einer Rautiefe Rz von 200 bis zu 300 µm auftreten.

Allgemeine sowie beispielhafte Angaben betreffend die Behandlung von Metalloberflächen und die Wechselwirkung von Prozessparametern mit diesen Werkstoffen (am Beispiel einer Aluminiumlegierung A380 und von Grauguss (GCI)) finden sich z.B. in der Masterarbeit von N. O'Neil ("Optimized Surface Roughening by Pulsed Waterjet for Suitable Adhesion Strengh of Plasma Transferred Wire Arc Coating"), Carleton University, Ottawa, Ontario aus dem Jahr 2020; vgl. dort die Seiten 49, 53, 63 und 64 (https:/Irepository.library.carleton.ca/downloads/z890rv29c). Dort finden sich auch Angaben über geeignete Messmethoden und Messinstrumente für verschiedene Prozessparameter.

Die Geschwindigkeit, mit der der Wasserstrahl über die zu behandelnde Belagträgerplattenoberfläche geführt wird, beträgt in der Regel zwischen 1 und 10 mm/s, vorzugsweise 1 bis 4 mm/s und insbesondere 2 bis 3 mm/s. Diese Angaben beziehen sich bevorzugt auf Belagträgerplatten aus Stahl. Weichere Materialien, wie z.B. Aluminium oder Aluminiumlegierungen, können auch mit noch höheren Geschwindigkeiten erfindungsgemäß aufgeraut werden.

Dabei steht die Wasserstrahldüse bevorzugt senkrecht zur zu bearbeitenden Oberfläche. Die Bearbeitung kann aber auch unter davon abweichenden Winkeln erfolgen. Das ist vorteilhaft für die Bearbeitung von Belagträgerplatten, die eine teilweise zurückgesetzte Oberfläche zur Anordnung des Reibbelags aufweisen. Durch eine Bearbeitung in einem schrägen Winkel können auch nach innen gerichtete Kanten der Belagträgerplatte gut aufgeraut werden. Der Abstand zwischen Oberfläche und Düse liegt bevorzugt im Bereich von 10 bis 70 mm, insbesondere im Bereich von 15 bis 50 mm.

Damit das Reibmaterial gut in die Oberfläche eindringen kann bzw. möglichst fest mit der Oberfläche verbunden ist, wird in der Regel die gesamte Belagoberfläche erfindungsgemäß behandelt.

Es kann erfindungsgemäß von Vorteil sein, wenn dem verwendeten Wasser Stoffe zugesetzt werden, welche kurzfristig eine Korrosion auf der Belagträgeroberfläche verhindern können. Dabei handelt es sich bevorzugt um Triethanolamin in einer Konzentration von unter 3%. Als Handelsprodukt ist hier z.B. das Produkt von Castrol Techniclean HP zu nennen, das dem Wasser bevorzugt in Konzentrationen von 1,5 bis 3 Gew.-% zugesetzt werden kann.

Durch die Anfertigung von Schliffbildern der behandelten Oberflächen kann das Eindringen des Reibmaterials in die aufgeraute Oberfläche gezeigt und kontrolliert werden. Diese Bilder zeigen in guter Auflösung die Hinterscheidungen und die Verankerungen des Reibmaterials auf den behandelten Oberflächen.

Bevorzugte Belagträgerplatten für die Zwecke der vorliegenden Erfindung bestehen aus Stahl, bevorzugt aus Weichstahl, aus Metalllegierungen auf Fe- und/oder Ti-Basis, aus Metalllegierungen mit Kohlefasern und aus glasfaser- oder kohlefaserverstärkten Kunststoffen (GFRP und/oder CFRP). Entsprechende Leichtbauträgerplatten sind im Stand der Technik bekannt und z.B. in der US 2017 204 920 A1 beschrieben.

Die Vorteile des erfindungsgemäßen Verfahrens zur Herstellung von Bremsbelägen unter Verwendung von Bremsbelagträgerplatten mit durch Wasserstrahlverfahren aufgerauter Oberflächen liegen somit auf der Hand:
- Das vorgeschlagene Wasserstrahlverfahren ist weniger zeit- und kostenintensiv als die entsprechenden im Stand der Technik zur Bearbeitung der Belagträgerplatten bekannten Verfahren,
- auf den Plattenoberflächen bleiben keine ungewollten Rückstände zurück, wie dies z.B. bei anderen Partikelstrahlverfahren, wie dem Sandstrahlverfahren, der Fall ist,
- die aufgeraute Oberfläche ist gleichzeitig sauber, wodurch ein zusätzlicher Reinigungsschritt entfällt,
- beim Wasserstrahlverfahren müssen auch keine zusätzlichen Substanzen, wie z.B. oberflächenaktive Stoffe oder Reinigungsmittel, eingesetzt werden, wodurch sich die Verfahrenskosten erhöhen würden, und
- das erfindungsgemäße Verfahren ist auch insbesondere für die kostengünstigen Belagträgerplatten aus Gusswerkstoffen, wie z.B. Grauguss, geeignet.

Die Figur 1 zeigt eine Belagträgerplatte aus Stahl nach Anlieferung im unbehandelten Zustand (a) und die gleiche Plattenoberfläche nach der erfindungsgemäßen Wasserstrahlbehandlung (b). Durch den Wasserstrahl hat sich eine saubere Plattenoberfläche mit Hinterschneidungen gebildet.

Figur 2 zeigt den Aufbau einer erfindungsgemäß bevorzugten gepulsten Wasserstrahldüse.

Figur 3 zeigt eine schematische Darstellung basierend auf einer Mikroskopaufnahme eines Schnitt- bzw. Schliffbilds einer erfindungsgemäß behandelten Belagträgerplattenoberfläche.

Figur 4 zeigt eine schematische Darstellung basierend auf einer REM-Aufnahme (Rasterelektronenmikroskop) eines Querschnitts eines erfindungsgemäß hergestellten Bremsbelags.

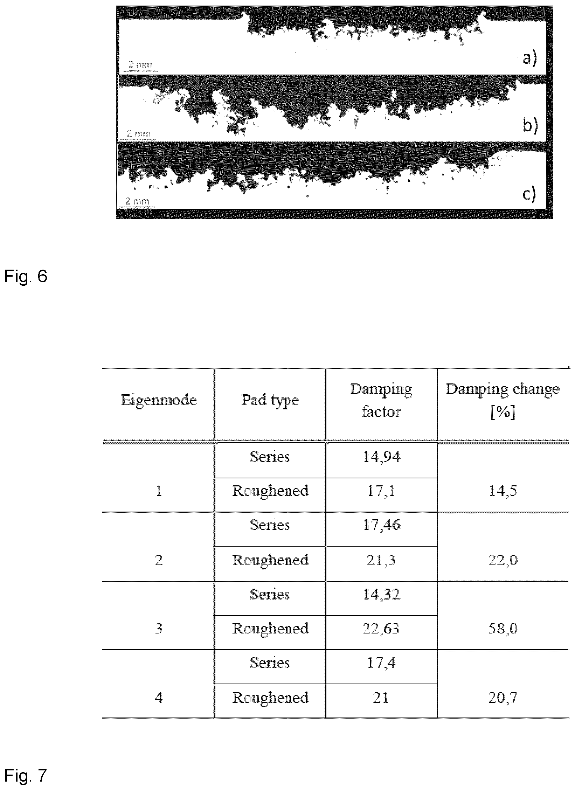

Die Figur 5 zeigt die Form des Wasserstrahls 4, der aus der in Figur 1 gezeigten gepulsten Wasserstrahldüse 1 austritt. Der Wasserstrahl 4 weist Blasen auf, die der Pulsation des Ultraschalltransducer 2 der gepulsten Wasserstrahldüse 1 entsprechen. Der gepulste Wasserstrahl 4 kann auf Metalloberflächen einen Kavitationseffekt erzeugen. Beispiele für diesen Effekt sind in Figur 6 a, b und c dargestellt.

Die Figuren 6 a, b und c zeigen Schnittbilder einer Aluminiumprobe, die mit einem gepulsten Wasserstrahl bei unterschiedlichen Wasserdrücken aufgeraut wurde. Der Wasserdruck des Wasserstrahls beträgt 20 MPa in Figur 6a, 30 MPa in Figur 6b und 40 MPa in Figur 6c.

Die Figur 7 zeigt Messungen des Dämpfungsfaktors eines erfindungsgemäß aufgerauten Belags und eines normalen Serienbelags. In allen Eigenmoden hat der aufgeraute Belag einen höheren Dämpfungsfaktor als der Serienbelag. Der Serienbelag verfügt über Messingstifte als Reibmaterialhalter und zwei Fasen, eine obere und eine radiale Fase. Der aufgeraute Belag hat die gleiche Rückenplatte wie der Serienbelag, jedoch ohne die Messingstifte. Der aufgeraute Belag hat das gleiche Reibmaterial ohne Fasen.

### Dabei bedeuten:

1: gepulste Wasserstrahldüse
2: Ultraschalltransducer
3: Hochdruckkammer
4: gepulster Hochdruck-Wasserstrahl
5: Düsenkammer
6: oszillierender Kern
7: Hochdruckwassereinlass
10: Belagträgerplatte
12: Reibbelag
14: Verzahnung des Reibbelags mit der Belagträgerplatte

Bis auf die erfindungsgemäße Aufrauung der Belagträgerplattenoberfläche erfolgt die Herstellung der Bremsbeläge nach den im Stand der Technik für die verschiedenen Bremsbeläge bekannten Verfahren zum Aufbringen von Reibmaterial bzw. eines Reibbelags auf eine Belagträgerplatte (mit und auch ohne Zwischenschicht zwischen Reibbelag und Belagträgerplatte). Dies geschieht in der Regel durch Verpressen des Reibmaterials/Reibbelags mit der Belagträgerplatte bei erhöhtem Druck und erhöhter Temperatur.

Zur weiteren Erhöhung der Stabilität des erfindungsgemäßen Bremsbelags kann ein Kleber auf die Belagträgerplattenoberfläche vor dem Befestigen des Reibbelags aufgebracht werden.

Die in Fig. 1b gezeigte Belagträgeroberfläche wurde mit einem Wasserstrahl in einer Geschwindigkeit von 3 mm/s abgefahren. Die Bearbeitung erfolgte unter Zimmertemperatur. Der Wasserstrahl dabei hatte einen Druck von ca. 760 bar.

Die in Fig. 3 gezeigte Belagträgerplattenoberfläche weist Rautiefen bis ca. 500 µm auf. Die Oberfläche wurde mit einem Wasserstrahl in einer Geschwindigkeit 1 mm/s abgefahren. Der Wasserstrahl hatte einen Druck von ca. 760 bar. Die gezeigte Belagträgerplattenoberfläche besteht aus Stahl.

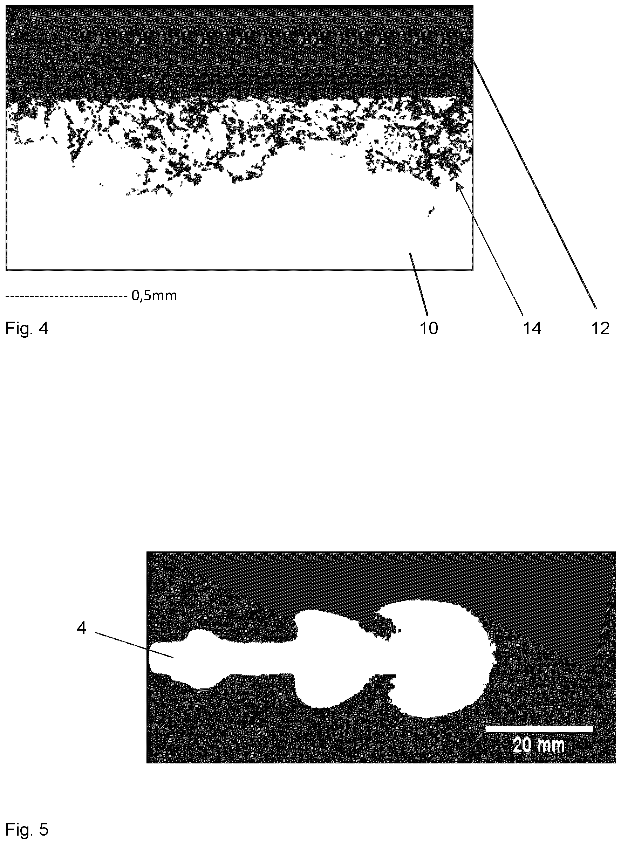

Bei der Belagträgerplatte 10 des in Fig. 4 ausschnittweise dargestellten Bremsbelags wurde der aufzurauende Bereich mit einem Wasserstrahl gemäß den zu Fig. 1 genannten Parametern bearbeitet. Die Belagträgerplatte 10 besteht aus Stahl. Die aufgeraute Oberfläche der Belagträgerplatte 10 weist Rautiefen überwiegend zwischen 150 bis 300 µm auf. Auf die aufgeraute Oberfläche der Belagträgerplatte 10 ist das Reibmaterial 12 direkt aufgepresst. Durch die aufgeraute Oberfläche der Belagträgerplatte 10 kommt es zu einer Zahnung 14 mit dem Reibmaterial 12 und zu einer verbesserten Anbindung sowie deutlichen Geräuschreduzierung.

## Patentansprüche

1. Verfahren zur Herstellung eines Bremsbelags, welcher eine Belagträgerplatte (10) und einen Reibbelag (12) aufweist, umfassend mindestens die folgenden Verfahrensschritte:
a) Bereitstellen einer Belagträgerplatte (10) zur Befestigung eines Reibbelags (12), mit oder ohne einer Zwischenschicht zwischen Belagträgerplatte (10) und Reibbelag (12), auf der Belagträgerplatte (10),
b) Aufrauen von zumindest einem Teilbereich einer Oberfläche der Belagträgerplatte (10) und
c) Befestigung des Reibbelags (12) auf der aufgerauten Belagträgerplattenoberfläche, **dadurch gekennzeichnet, dass** das Aufrauen der Belagträgerplattenoberfläche mit einem gepulsten Hochdruck-Wasserstrahl (4) erfolgt.

2. Verfahren nach Anspruch 1, **dadurch gekennzeichnet, dass** der Teilbereich auf eine Oberflächenrauheit mit einer Rautiefe von 50 bis 500 Mikrometer aufgeraut wird.

3. Verfahren nach Anspruch 1 oder 2, **dadurch gekennzeichnet, dass** der Teilbereich auf eine Oberflächenrauheit mit einer Rautiefe von 100 bis 350 Mikrometer aufgeraut wird.

4. Verfahren nach einem der Ansprüche 1 bis 3, **dadurch gekennzeichnet, dass** die Belagträgerplattenoberfläche nach dem Aufrauen und vor dem Anbringen des Reibbelags (12) oder der Zwischenschicht mit keinem Kleber behandelt wird.

5. Verfahren nach einem der Ansprüche 1 bis 4, **dadurch gekennzeichnet, dass** der Wasserstrahl einen Wasserdruck von 600 bis 850 bar-und einen Wasserdruck von 200 bis 400 bar aufweist, wenn die Belagträgerplatte (10) aus einer Metalllegierung auf Aluminiumbasis besteht.

6. Verfahren nach einem der Ansprüche 1 bis 5, **dadurch gekennzeichnet, dass** der Wasserstrahl einen Pulsationsbereich von 10,000 bis 20,000 Pulse/s aufweist.

7. Verfahren nach einem der Ansprüche 1 bis 6, **dadurch gekennzeichnet, dass** der Wasserstrahl eine Geschwindigkeit von 150 bis 380 m/s aufweist.

8. Verfahren nach einem der Ansprüche 1 bis 7, **dadurch gekennzeichnet, dass** der Wasserstrahl die aufzurauende Belagträgerplattenoberfläche mit einer Geschwindigkeit von 1 bis 10 mm/s, bevorzugt von 1 bis 4 mm/s und insbesondere 2 bis 3 mm/s abfährt.

9. Verfahren nach einem der Ansprüche 1 bis 8, **dadurch gekennzeichnet, dass** die Austrittsdüse des Wasserstrahls in einem Abstand von 15 mm bis 50 mm von der aufzurauenden Belagträgerplattenoberfläche bewegt wird.

10. Verfahren nach einem der Ansprüche 1 bis 9, **dadurch gekennzeichnet, dass** der Wasserstrahl senkrecht auf die aufzurauende Belagträgerplattenoberfläche auftrifft.

11. Verfahren nach einem der Ansprüche 1 bis 9, **dadurch gekennzeichnet, dass** der Wasserstrahl in einem schrägen Winkel auf die aufzurauende Belagträgerplattenoberfläche auftrifft.

12. Verfahren nach einem der Ansprüche 1 bis 11, **dadurch gekennzeichnet, dass** dem Wasserstrahl korrosionsinhibierende Substanzen zugesetzt werden.

13. Verfahren nach einem der Ansprüche 1 bis 12, **dadurch gekennzeichnet, dass** die Belagträgerplatte (10) aus Metalllegierungen auf Fe-, Ti- oder Aluminiumbasis, aus Metalllegierungen mit Kohlefasern oder aus glasfaserverstärkten oder kohlefaserverstärkten Kunststoffen besteht.

14. Verwendung einer nach dem Verfahren gemäß einem der Ansprüche 1 bis 13 aufgerauten Belagträgerplatte (10) zur Herstellung eines Bremsbelags.

15. Verfahren zur Verminderung von durch Bremsbeläge verursachten Bremsgeräuschen, **dadurch gekennzeichnet, dass** ein Bremsbelag, hergestellt nach dem Verfahren gemäß einem der Ansprüche 1 bis 13, in einem Fahrzeug verwendet wird.

16. Verwendung eines Bremsbelags, hergestellt nach dem Verfahren gemäß einem der Ansprüche 1 bis 13, zur Verminderung von durch Bremsbeläge verursachten Bremsgeräuschen.

17. Bremsbelag, hergestellt nach dem Verfahren gemäß einem der Ansprüche 1 bis 13.
